# EUROPÄISCHE PATENTSCHRIFT

(11) **EP 1 279 219 B1**
(45) Veröffentlichungstag und Bekanntmachung des Hinweises auf die Patenterteilung: **06.10.2004**
(21) Anmeldenummer: 01940340.1
(22) Anmeldetag: 17.04.2001
(51) Int. Cl.: H02K 23/66, H02P 5/17

(54) **ELEKTROHYDRAULISCHER WANDLER, INSBESONDERE MOTORPUMPENAGGREGAT FÜR EIN ELEKTRONISCHES FAHRDYNAMIKREGELUNGSSYSTEM**
ELECTROHYDRAULIC CONVERTER, ESPECIALLY A MOTOR PUMP MODULE FOR AN ELECTRONIC DRIVING DYNAMICS CONTROL SYSTEM
CONVERTISSEUR ELECTRO-HYDRAULIQUE, EN PARTICULIER MODULE DE POMPAGE MOTEUR POUR SYSTEME ELECTRONIQUE DE REGULATION DE DYNAMIQUE DE MOUVEMENT DE VEHICULE

(30) Priorität: 22.04.2000 DE 10019993; 29.08.2000 DE 10042378
(43) Veröffentlichungstag der Anmeldung: 29.01.2003
(73) Patentinhaber: Continental Teves AG & Co. oHG, 60488 Frankfurt (DE)
(72) Erfinder: TOTH, Tibor, 65929 Frankfurt am Main (DE); WAHL, Holger, 65510 Wallrabenstein (DE); KURBASA, Josko, 35647 Waldsolms (DE); BEUSS, Jochen, 64390 Erzhausen (DE); NETZ, Achim, 64342 Seeheim-Jugenheim (DE); NEDERSTIGT, Johannes-Dieter, 64291 Darmstadt (DE)
(86) Internationale Anmeldenummer: PCT/EP2001/004355
(87) Internationale Veröffentlichungsnummer: WO 2001/082454

(56) Entgegenhaltungen:
- EP-A- 0 543 419
- EP-A- 0 842 070
- DE-U- 8 811 964
- US-A- 5 704 766
- US-A- 5 811 947
- PATENT ABSTRACTS OF JAPAN vol. 007, no. 200 (E-196), 3. September 1983 (1983-09-03) -& JP 58 099280 A (SEKOH GIKEN KK), 13. Juni 1983 (1983-06-13)
- PATENT ABSTRACTS OF JAPAN vol. 002, no. 019 (E-011), 8. Februar 1978 (1978-02-08) & JP 52 137621 A (SONY CORP), 17. November 1977 (1977-11-17)

## Beschreibung

Die Erfindung betrifft ein System nach dem Oberbegriff des Anspruchs 1. Ein gattungsgemäβes System ist aus US-A-5,811,947 bekannt.

Kraftfahrzeuge mit Verbrennungsmotor sind zunehmend mit elektronisch gesteuerten aktiven Bremseinrichtungen und/oder elektronischen System zur Regelung der Fahrdynamik, wie beispielsweise ABS, ABS plus, ASR oder ESP ausgestattet. Der mechanische Teil des Bremsdruckreglers umfaßt neben elektromagnetisch gesteuerten Hydraulikventilen auch eine elektrisch angetriebene hydraulische Pumpe zur Erzeugung von Bremsdruck.

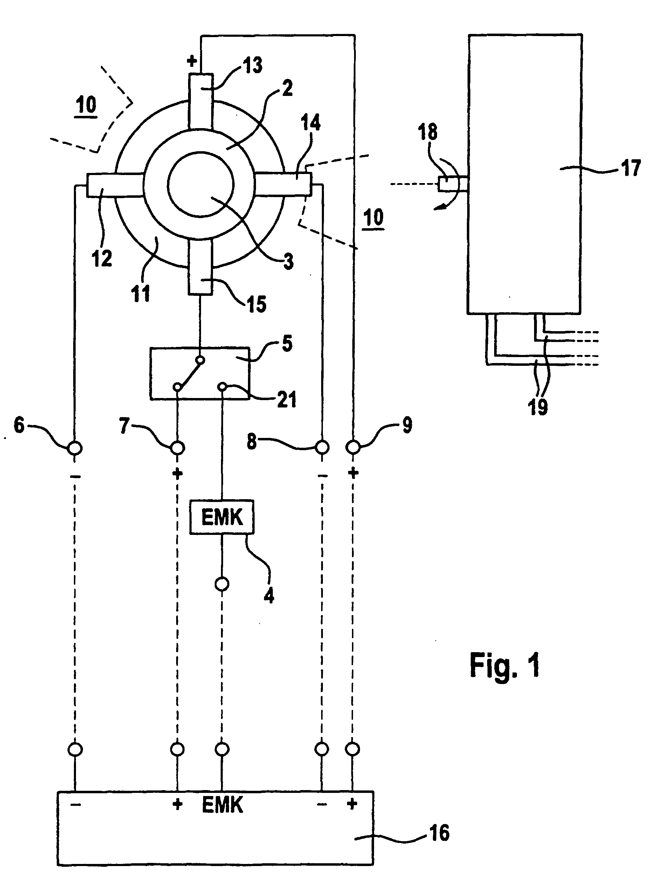

Eine elektrische Maschine zur Wandlung von elektrischer und mechanischer Energie, die als Pumpenmotor für ein Antiblokkiersystem geeignet ist, beschreibt die DE-A-41 42 993. Die dort dargestellte Figur 1 zeigt im Querschnitt einen Elektromotor, der mit einer Radialkolbenpumpe verbindbar ist. Der Elektromotor wird mit Gleichstrom betrieben und weist neben Stator, Rotor, Ankerwinklungen etc. einen Kommutator mit zwei schleifenden Kohlebürsten auf. Ein schwingungsdämpfendes Element an der Welle des Läufers verhilft der Pumpe zu einem geräuschärmeren Betrieb.

An elektromagnetische Wandler für Antiblockiersysteme werden extreme Anforderungen bezüglich Leistungsdichte, Zuverlässigkeit, Preiswürdigkeit, Servicefreundlichkeit und Geräuscharmut gestellt. Somit besteht weiterhin ein Bedarf an weiter verbesserten hydraulischen Pumpen.

Insbesondere nicht zuletzt bei neueren elektrohydraulischen Bremssystemen (EHB) werden besonders hohe Anforderungen bezüglich der Dauerlauffähigkeit einer hydraulischen Pumpe bzw. an den mit der Pumpe verbundenen elektromagnetischen Wandler gestellt. Bekannte elektromagnetische Wandler erfüllen die gewünschten Eigenschaften bislang nicht oder nur unzureichend.

Erfindungsgemäß wird daher eine gegenüber bekannten hydraulischen Pumpen hinsichtlich der Ansteuerung des Pumpenmotors verbesserte Vorrichtung angegeben.

Das erfindungsgemäße System ist durch die Merkmale des Anspruchs 1 definiert. Es umfaßt einen elektromechanischen Wandler, insbesondere Elektromotor, eine hydraulische Pumpe und eine elektrische Ansteuereinheit für den Wandler.
Bei dem elektronischen Fahrdynamiksteuerungssystem kann es sich beispielsweise um sogenannte ABS-, ABS+-, ASR- oder ESP-Systeme handeln, wobei insbesondere solche Systeme vorteilhaft mit einer erfindungsgemäßen Vorrichtung ausgestattet sein können, die innerhalb eines elektrohydraulischen Bremssystems (EHB) zum Einsatz kommen.

Der Wandler weist einen magnetischen oder magnetisierbaren Stator und einen Rotor, sowie Anschlüsse zum Anschluß der Ansteuereinheit und eine Kommutierungseinrichtung zur Ansteuerung von elektromagnetischen Windungen des Rotors auf. Erfindungsgemäß umfaßt die Kommutierungseinrichtung drei oder mehrere jeweils mit den Anschlüssen elektrisch verbundene Kommutierungselemente, so daß die Windungen des Rotors durch die Ansteuereinheit einzeln ansteuerbar sind. Gemäß der Erfindung ist mindestens eins der Kommutierungselemente mit einem Umschaltelement verbunden. Hierdurch wird ein zusätzlicher Anschluß zur Verbindung mit einer Einrichtung zur Drehzahlmessung bereitstellt.

Die Kommutierungseinrichtung ermöglicht die getrennte elektrische Ansteuerung der Windungen im Rotor. Auf diese Weise ist es möglich, die Kennlinie des elektromagnetischen Wandlers an die gewünschten Anforderungen auf einfache Weise z.B. elektronisch gesteuert anzupassen. Bei niedrigerer Drehzahl wird eine Geräuschreduktion erreicht. Bei Vollastbetrieb kann dennoch die volle Förderleistung erzielt werden.

Zweckmäßigerweise lassen sich Einschaltstromspitzen reduzieren, indem das Einschalten des Motors nur unter Zuhilfenahme einer der schaltbaren Bürsten durchgeführt wird.

Die Kommutierungseinrichtung ist beispielsweise eine Anordnung aus in Käfigen geführten Kohlen, die mit Federelementen an einen Kontakt im Bereich der Rotorachse gepreßt werden. Entsprechend aufgebaute Kommutierungseinrichtungen für Gleichstrommotore sind an sich bekannt.
Vorzugsweise umfaßt die Kommutierungseinrichtung vier Kommutierungselemente zur Ansteuerung von weiteren Windungen des Rotors. Für bestimmte Anforderungen zur bzw. für eine feinere Anpassung der Motorkennlinie können auf fünf oder mehrere Kommutierungselemente nicht zuletzt aus Redundanzgründen sinnvoll sein.

Eine Ausgestaltung betrifft daher auch ein System zur Steuerung von Bremsen in Kraftfahrzeugen mit mindestens zwei redundant ausgeführten Systemelementen (z.B. ein doppelt vorhandener elektronisch/hydraulische Bremsregler oder teilweise vorhandene Bauelemente von Bremsreglern), wobei eine erste Windung des Wandlers Bestandteil eines ersten Systemelements ist und eine weitere Windung des Wandlers Bestandteil eines weiteren Systemelements ist, welches redundant zum ersten Systemelement aufgebaut ist. Fällt zum Beispiel im ersten Systemelement eine Windung des Motors aus, kann das weitere Systemelement die zusätzlich vorhandene weitere Windung ansteuern.

Bei der Ansteuereinheit kann es sich im einfachsten Fall um eine herkömmliche Spannungsversorgung mit mindestens vier Ausgängen handeln.
Bevorzugt umfaßt die Ansteuereinheit einen Taktgenerator zur pulsweisen und/oder getakteten Ansteuerung der Windungen. Hierdurch läßt sich die Förderleistung der Pumpe besonders hochauflösend regeln. Eine besonders einfache Regelung der Drehzahl läßt sich durch Verwendung eines Zweipunkt-Reglers erzielen.
Besonders bevorzugt ist das Umschaltelement und die Einrichtung zur Drehzahlmessung in der Ansteuereinheit integriert. Hierdurch werden vorteilhafterweise elektronische Bauteile eingespart.

Besonders vorteilhaft ist es, daß die erfindungsgemäße Vorrichtung sich aus bereits bekannten gattungsgemäßen Vorrichtungen durch geringe Änderungen ableiten läßt. Das erfinderische Konzept ist daher besonders einfach in eine bestehende Großserienfertigung von Antiblockiersystemen, wie beispielsweise ABS, ASR oder ESP, einbindbar.

Nachfolgend wird die erfindungsgemäße Vorrichtung anhand eines in der Figur dargestellten Ausführungsbeispiels näher erläutert.

Es zeigt

Fig. 1 eine schematische Darstellung eines Beispiels für eine erfindungsgemäße Vorrichtung mit einem Elektromotor 2,3,10,11,12,13,14,15, welcher über eine Rotorachse 3 mit der Pumpenachse 18 einer hydraulischen Pumpe 17 mit hydraulischen Leitungen 19 verbunden ist.
Auf der zylindrischen Rotorachse 3 ist umlaufend der Kollektor 2 mit nicht gezeichneten Kontaktflächen angeordnet. Mit den Kontaktflächen stehen die während der Rotation des Rotors schleifenden Bürsten 12,13,14,15 elektrisch in Kontakt. Auf den Rotor 11 sind nicht dargestellte elektromagnetische Windungen aufgebracht, die Teile des Rotors so magnetisieren, daß in Verbindung des Rotors 10 aus einem Magnetmaterial auf an sich bekannte Weise ein Drehmoment in Richtung der Rotorachse 3 erzeugt wird. Die Windungen sind so mit den Kontaktflächen des Kollektors 2 verbunden, daß in praktisch jeder Position des Rotors zwei getrennte Windungen durch jeweils zwei Bürsten an die elektrische Motorsteuerung 16 über die Klemmen 6...9 angeschlossen sind.
Im Beispiel ist eine der vier Bürsten über einen elektronischen Schalter mit der Motorsteuerung verbunden, welcher dazu dient, eine Windung entweder an oder auszuschalten. Hierdurch kann bei ausgeschalteter Windung ein Teillast-Betrieb durchgeführt werden.
Über Anschluß 21, welcher im Teillast-Betrieb mit der Bürste 15 elektrisch verbunden ist, kann die nicht mit Strom versorgte Windung des Rotors zur Messung der Motordrehzahl über die elektromotorische Kraft (EMK), insbesondere während des Motorbetriebs, herangezogen werden. Hierzu ist Anschluß 21 mit einer EMK-Auswerteschaltung 4 verbunden. Die EMK-Auswerteschaltung kann in der Motorsteuerung 16 integriert sein.

Die Einrichtung zur Drehzahlregelung in der Ansteuereinheit ist vorzugsweise ein an sich bekannter Zweipunkt-Regler, wodurch sich eine Kostenreduzierung bei der mittels einer Software programmierbaren Ansteuerung ergibt.

### Bezugszeichenliste

- 12: Kommutierungselement
- 13: Kommutierungselement
- 14: Kommutierungselement
- 15: Kommutierungselement
- 2: Kollektor
- 3: Rotorachse
- 4: Drehzahlerfassungseinrichtung
- 5: Umschaltelement
- 6: Ansteuerklemme
- 7: Anschluß
- 8: Anschluß
- 9: Anschluß
- 10: Stator
- 11: Rotor
- 16: Motorsteuerung
- 17: Pumpe
- 18: Pumpenachse
- 19: Hydraulische Leitungen
- 20: Drehzahlmessungseinrichtung
- 21: EMK-Anschluß

## Patentansprüche

1. Elektronisches Fahrdynamiksteuerungssystem, umfassend einen elektromechanischen Wandler, insbesondere Elektromotor, eine hydraulische Pumpe (17) und eine elektrische Ansteuereinheit (4,5,16) für den Wandler, wobei der Wandler einen magnetischen oder magnetisierbaren Stator (10) und einen Rotor (11), sowie Anschlüsse (6...9) zum Anschluß der Ansteuereinheit und eine Kommutierungseinrichtung (2,12...15) zur Ansteuerung von elektromagnetischen Windungen des Rotors aufweist, **dadurch gekennzeichnet, daß** die Kommutierungseinrichtung drei oder mehrere jeweils mit den Anschlüssen elektrisch verbundene Kommutierungselemente (12...15) umfaßt, so daß die Windungen des Rotors durch die Ansteuereinheit (4,5,16) einzeln ansteuerbar sind, wobei mindestens ein Kommutierungselement mit einem Umschaltelement (5) verbunden ist, welches einen zusätzlichen Anschluß (21) zur Verbindung mit einer Einrichtung zur Drehzahlmessung (4) bereitstellt.

2. System nach Anspruch 1, **dadurch gekennzeichnet, daß** die Kommutierungseinrichtung vier Kommutierungselemente umfaßt.

3. System nach Anspruch 1 oder 2, **dadurch gekennzeichnet, daß** die Ansteuereinheit einen Taktgenerator zur pulsweisen und/oder getakteten Ansteuerung der Windungen umfaßt.

4. System nach mindestens einem der Ansprüche 1 bis 3, **dadurch gekennzeichnet, daß** mindestens zwei redundant ausgeführte Systemelemente vorhanden sind, wobei eine erste Windung des Wandlers Bestandteil eines ersten Systemelements ist und eine weitere Windung des Wandlers Bestandteil eines weiteren Systemelements ist, welches redundant zum ersten Systemelement aufgebaut ist.

## Claims

1. Electronic driving dynamics control system, comprising an electromechanical transducer, especially an electric motor, a hydraulic pump (17), and an electric actuating unit (4,5,16) for the transducer, the said transducer including a magnetic or magnetizable stator (10) and a rotor (11), as well as connections (6...9) for connecting the actuating unit, and a commutation device (2,12...15) for the actuation of electromagnetic windings of the rotor,
**characterized in that** the commutation device includes three or more commutating elements (12...15) that are electrically connected to the respective connections so that the windings of the rotor can be actuated individually by the actuating unit (4,5,16), with at least one commutating element being connected to a change-over element (5) that provides for an additional connection (21) for coupling to a rotational speed measurement device (4).

2. System as claimed in claim 1,
**characterized in that** the commutation device comprises four commutating elements.

3. System as claimed in claim 1 or 2,
**characterized in that** the actuating unit comprises a clock generator for the pulsed and/or clocked actuation of the windings.

4. System as claimed in at least any one of claims 1 to 3,
**characterized in that** at least two system elements of redundant design are provided, and a first winding of the transducer is a component of a first system element, and a second winding of the transducer is a component of another system element which is redundantly designed with respect to the first system element.

## Revendications

1. Système électronique de commande de la dynamique de conduite, comprenant un convertisseur électromécanique, en particulier un moteur électrique, une pompe hydraulique (17) et une unité de commande électrique (4, 5, 16) pour le convertisseur, le convertisseur comportant un stator magnétique ou magnétisable (10) et un rotor (11), ainsi que des connexions (6...9) pour le raccordement de l'unité de commande et un dispositif de commutation (2, 12...15) pour la commande de spires électromagnétiques du rotor, **caractérisé en ce que** le dispositif de commutation comprend trois éléments de commutation (12...15) ou plus, reliés électriquement chacun aux connexions, ce qui fait que les spires du rotor peuvent être commandées individuellement par l'unité de commande (4, 5, 16), un élément de commutation au moins étant relié à un organe de commutation (5) qui offre une connexion (21) supplémentaire pour la liaison avec un dispositif de mesure de la vitesse de rotation (4).

2. Système selon la revendication 1, **caractérisé en ce que** le dispositif de commutation comprend quatre éléments de commutation.

3. Système selon la revendication 1 ou 2, **caractérisé en ce que** l'unité de commande comprend un générateur de rythme pour la commande pulsée et/ou cadencée des spires.

4. Système selon l'une au moins des revendications 1 à 3, **caractérisé en ce que** sont prévus au moins deux éléments réalisés redondants du système, une première spire du convertisseur faisant partie intégrante d'un premier élément du système et une autre spire du convertisseur faisant partie intégrante d'un autre élément du système qui est redondant par rapport au premier élément du système.
